# EUROPEAN PATENT APPLICATION

(11) **EP 4 737 512 A1**
(43) Date of publication of application: **06.05.2026**
(21) Application number: 23946293.0
(22) Date of filing: 31.07.2023
(51) Int. Cl.: C08K 5/5313, C07F 9/6574, C08L 63/00, C08L 71/12

(54) **HYDROXYL-CONTAINING DOPO COMPOSITE FLAME RETARDANT, AND PREPARATION METHOD THEREFOR AND USE THEREOF**

(30) Priority: 24.07.2023 CN 202310913894
(71) Applicant: Ningbo Institute of Materials Technology and Engineering, Chinese Academy of Sciences, Ningbo, Zhejiang 315201 (CN); Zhejiang Wansheng Co., Ltd, Taizhou, Zhejiang 317000 (CN)
(72) Inventor: YAO, Qiang, Ningbo, Zhejiang 315200 (CN); SUN, Jinhao, Ningbo, Zhejiang 315200 (CN); LI, Xufeng, Ningbo, Zhejiang 315200 (CN); CAO, Weihong, Ningbo, Zhejiang 315200 (CN); CHU, Zhaoning, Ningbo, Zhejiang 315200 (CN)
(74) Representative: Huang, Liwei
(86) International application number: PCT/CN2023/110073
(87) International publication number: WO 2025/020211

(57) **Abstract**

Provided in the present invention is a hydroxyl-containing DOPO composite flame retardant, comprising a component A having the structure of formula (I) and a component B having the structure of formula (II). In the hydroxyl-containing DOPO composite flame retardant, the content of the component A is larger than or equal to 50 wt%, but smaller than 100 wt%, and the content of the component B is larger than 0 wt%, but smaller than or equal to 50 wt%. The composite flame retardant composed of the component A and the component B achieves the integration of high flame retardance and high physical properties in a flame-retardant material, and overcomes the defects that using the component B alone leads to low flame-retardant efficiency and that using the component A alone results in deterioration in the mechanical properties of a high polymer material.

## Description

### TECHNICAL FIELD

The present invention belongs to the technical field of flame retardant preparation, and relates to a hydroxyl-containing DOPO composite flame retardant, and a preparation method therefor and a use thereof.

### DESCRIPTION OF RELATED ART

With the rapid rise of polymer material science, polymer materials have been widely used in human production and life. Since most of the polymer materials are flammable, more and more fires are caused by the ignition of polymer materials. Therefore, the flame retardance of polymer materials have been widely concerned. Polymer materials themselves cannot meet the requirements of regulations on flame retardance, and flame retardants often need to be added to achieve the purpose of flame retardance. Recently, halogen-free flame retardants such as phosphorus-based flame retardants have achieved substantial development due to the need of environmental protection. Especially 9,10-dihydro-9-oxa-10-phosphaphenanthrene-10-oxide (DOPO) and derivatives thereof have attracted considerable attention owing to their high flame-retardant efficiency, low toxicity, and minimal impact on the properties of polymer materials.

The reported DOPO derivatives can be divided into reactive and additive types: reactive derivatives have reactive groups (such as carboxyl and hydroxyl groups) attached to phosphorus substituents; in contrast, additive derivatives are structurally inert with the absence of reactive functional groups.

Chinese Patent Publication No. CN100366627C reports DiDOPO with a hydroxyalkyl-substituted vinylene bridge chain structure, where the hydroxyl group is distant from the phosphorus atom. The DiDOPO, with high reactivity, is capable of undergoing transesterification with carboxylic acids or esters. Chinese Patent Publication No. CN104086593B reports the preparation of DiDOPO with a phenylene bridge chain structure by addition of a semi-aryl ketone and DOPO. The reaction process proceeds as follows: first, DOPO reacts with ketone group to form an α-hydroxyphosphine compound; subsequently, the hydroxyl group undergoes dehydration with heating to generate a vinyl phosphonate, thereby introducing a second DOPO moiety. Chinese Patent Publication No. CN106366128B introduces allyloxy group by using hydroxyl group of an α-hydroxyphosphine compound, which has high reactivity. Moreover, the patent specifically points out that hydroxyl-containing phosphaphenanthrene compounds are not suitable for low-dielectric systems (with a dielectric loss of less than 0.010). It can be concluded from the patent that the introduction of hydroxyl group is not an option unless it is for the purpose of reaction.

Japanese Patent Publication Nos. JPH11-106619 and JP2001270993 and Chinese Patent Publication No. CN102428091B report DiDOPO having an inert bridge chain structure without reactive functional groups. PCT Patent Application No. WO2013020696A2 and Chinese Patent Publication No. CN109851639B report DOPO derivatives containing P-N bonds. These derivatives can be used as additive flame retardants.

Known reactive DOPO derivatives need to further react with polymers or monomers for use, which is not conducive to flame retardant modification of known polymer materials, and the different reactivity of such derivatives with the polymers or monomers leads to poor performance controllability and high costs. Additive DOPO derivatives have a greater impact on the physical properties of flame-retardant polymer materials. For instance, U.S. Patent No. US8536256B2 discloses that the incorporation of DiDOPO with a vinylene bridge chain structure reduces the glass transition temperature (T_{g}) of epoxy resin from the range of 163°C to 172 °C to a range of 126 °C to 131 °C, which fails to meet the requirements of lead-free soldering and thus limits the scope of application of the epoxy resin. In addition, Chinese Patent Publication No. CN106366128B points out that the presence of hydroxyl group is detrimental to the dielectric loss factor (Df) of flame-retardant polymer materials, making such polymer materials difficult to use in copper-clad laminates with low dielectric loss.

Based on the above analysis, the known reactive and additive DOPO derivatives are still difficult to meet the requirements of thermal and chemical stability and small impact on the physical properties of flame-retardant polymer materials, and the known processes for preparing DOPO derivatives are complex and costly. It is still desired to develop a flame retardant with simple preparation process, high atom efficiency, good flame retardance, little impact on the physical properties of flame-retardant polymer materials and even capable of improving the electrical properties of flame retardant systems.

### BRIEF SUMMARY OF THE INVENTION

An objective of the present invention is to address the defects in the prior art, and to provide a hydroxyl-containing DOPO composite flame retardant, and a preparation method therefor and a use thereof for the flame retardance of a polymer material. The hydroxyl-containing DOPO composite flame retardant has a simple and convenient preparation method, high atom efficiency and good flame retardance, and can retain excellent physical properties of a polymer material.

A first objective of the present invention is achieved by the following technical solutions:

A hydroxyl-containing DOPO composite flame retardant, including a component A having a structure of formula (I) and a component B having a structure of formula (II), 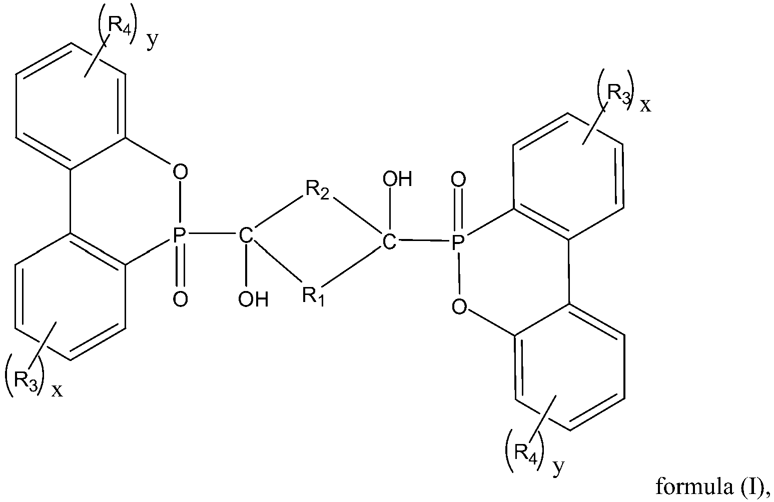 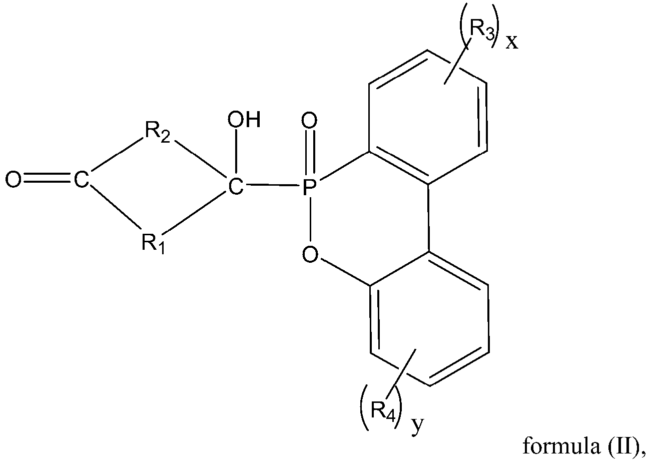
wherein R₁ and R₂ are independently selected from C₁-C₁₈alkylene, and any hydrogen atom on the alkylene may be independently substituted with C₁-C₈ alkyl or C₆-C₁₈ aryl;
R₃ and R₄ are independently selected from hydrogen, C₁-C₁₈ alkyl, C₃-C₁₈heteroaryl, and C₆-C₂₄ aryl, and any hydrogen atom on an aromatic ring of the aryl or heteroaryl may be independently substituted with any C₁-C₁₈ alkyl; and
x and y are independently selected from 0, 1, 2, 3, and 4.

Preferably, R₁ and R₂ are independently selected from C₁-C₈ alkylene, and any hydrogen atom on the alkylene may be independently substituted with C₁-C₁₈ alkyl. Further preferably, R₁ and R₂ are independently selected from methylene, ethylene, propylene, butylene, methyl-substituted methylene, dimethyl-substituted methylene, ethyl-substituted methylene, methyl-substituted ethylene, dimethyl-substituted ethylene, methyl-substituted propylene, dimethyl-substituted propylene, and propyl-substituted propylene.

Preferably, R₃ and R₄ are independently selected from hydrogen, C₁-C₈ alkyl, C₃-C₁₈heteroaryl, and C₆-C₁₈ aryl. Further preferably, R₃ and R₄ are independently selected from hydrogen, methyl and ethyl. Optionally, R₃ and R₄ are hydrogen atoms.

Preferably, x=y=0.

In the hydroxyl-containing DOPO composite flame retardant, the content of the component A is larger than or equal to 50 wt%, but smaller than 100 wt%, and the content of the component B is larger than 0 wt%, but smaller than or equal to 50 wt%. In the present invention, wt% refers to percent by weight.

Preferably, the total content of the component A and the component B is 100 wt%, and the content of the component A is larger than or equal to 50 wt%, but smaller than 100 wt%. When the content of the component A is less than 50 wt%, the flame-retardant performance of the hydroxyl-containing DOPO composite flame retardant (hereinafter referred to as "Mixture C") composed of the component A and the component B will decrease. The content of the component A can be any one of 50 wt%, 55 wt%, 60 wt%, 65 wt%, 70 wt%, 75 wt%, 80 wt%, 85 wt%, 90 wt%, 91 wt%, 92 wt%, 93 wt%, 94 wt%, 95 wt%, 96 wt%, 97 wt%, 98 wt%, 99 wt%, 99.1 wt%, 99.2 wt%, 99.3 wt%, 99.4 wt%, 99.5 wt%, 99.6 wt%, 99.7 wt%, 99.8 wt%, 99.9 wt%, 99.99 wt%, 99.999 wt%, 99.9999 wt%, 99.99999 wt%, or within a range between any two of the aforementioned values.

Surprisingly, it is found in the experiments that the introduction of the component B can improve the physical properties of flame-retardant polymer materials. However, the content of the component B should be less than 50 wt%. When the content of Component B is greater than 50 wt%, the flame-retardant effect of Mixture C will decrease. For flame-retardant materials, flame-retardant performance and physical properties are usually a pair of contradictory characteristics. However, within the scope of the present invention, Mixture C composed of the component A and the component B unexpectedly achieves both high flame-retardant performance and excellent physical properties for flame-retardant materials.

Preferably, in the hydroxyl-containing DOPO composite flame retardant, the content of the component A is larger than or equal to 65 wt%, but smaller than 100 wt%, and the content of the component B is larger than 0 wt%, but smaller than or equal to 35 wt%. More preferably, the content of the component A is larger than or equal to 82 wt%, but smaller than 100 wt%, and the content of the component B is larger than 0 wt%, but smaller than or equal to 18 wt%. More preferably, the content of the component A is larger than or equal to 90 wt%, but smaller than 100 wt%, and the content of the component B is larger than 0 wt%, but smaller than or equal to 10 wt%. More preferably, the content of the component A is larger than or equal to 97 wt%, but smaller than 100 wt%, and the content of the component B is larger than 0 wt%, but smaller than or equal to 3 wt%.

A second objective of the present invention is achieved by the following technical solutions:

A preparation method for the hydroxyl-containing DOPO composite flame retardant includes the following steps:
reacting a compound having a structure of formula (III) with an aliphatic cyclic diketone compound having a structure of formula (IV) under controlled conditions, and then purifying a reaction product to obtain a mixed product containing the component A having the structure of formula (I) and the component B having the structure of formula (II). 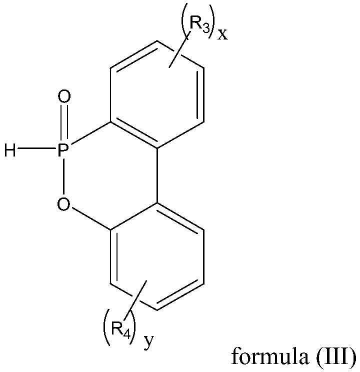
wherein R₃ and R₄, as defined for R₃ and R₄ in formula (I) and formula (II), are independently selected from hydrogen, C₁-C₁₈ alkyl, C₃-C₁₈heteroaryl, and C₆-C₂₄ aryl, and any hydrogen atom on an aromatic ring of the aryl or heteroaryl may be independently substituted with any C₁-C₁₈ alkyl;
x and y, as defined for x and y in formula (I) and formula (II), are independently selected from 0, 1, 2, 3, and 4; 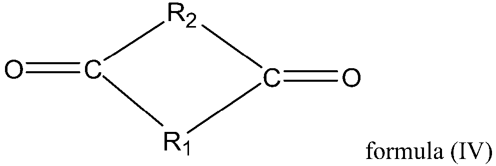
wherein R₁ and R₂, as defined for R₁ and R₂ in formula (I) and formula (II), are independently selected from C₁-C₁₈alkylene, and any hydrogen atom on the alkylene may be independently substituted with C₁-C₈ alkyl or C₆-C₁₈ aryl.

Preferably, the compound having the structure of formula (III) is 9,10-dihydro-9-oxa-10-phosphaphenanthrene-10-oxide (DOPO). That is, in formula (III), x and y are 0.

Optionally, the aliphatic cyclic diketone compound having the structure of formula (IV) includes, but is not limited to, one or more selected from cyclohexanedione, cyclobutanedione, cyclopentanedione, cycloheptanedione, cyclooctanedione, methylcyclohexanedione, dimethylcyclohexanedione, propylcyclohexanedione, tetramethylcyclobutanedione, methylcyclopentanedione, dimethylcyclopentanedione, and ethylcyclopentanedione. Preferably, the aliphatic cyclic diketone compound having the structure of formula (IV) is one or more selected from cyclohexanedione, methylcyclohexanedione, dimethylcyclohexanedione, cyclopentanedione, and cycloheptanedione. Further preferably, the aliphatic cyclic diketone compound having the structure of formula (IV) is one or more selected from 1,4-cyclohexanedione, 1,3-cyclohexanedione, 5,5-dimethyl-1,3-cyclohexanedione, and cyclopentanedione. Most preferably, the aliphatic cyclic diketone compound is 1,4-cyclohexanedione.

In Mixture C composed of the component A having the structure of formula (I) and the component B having the structure of formula (II), the contents of the component A and the component B may be controlled by means of, such as, controlling the molar ratio of the aliphatic cyclic diketone compound having the structure of formula (IV) to the compound having the structure of formula (III), reaction time, and purification method.

Preferably, in the present invention, by means of, such as, controlling the molar ratio of the aliphatic cyclic diketone compound having the structure of formula (IV) to the compound having the structure of formula (III), reaction time, and purification method, the contents of the compound A and the compound B in the mixed product satisfy that the content of the compound A is larger than or equal to 50 wt% but smaller than 100 wt%, and the content of the compound B is larger than 0 wt% but smaller than or equal to 50 wt%.

Preferably, when the compound having the structure of formula (III) reacts with the aliphatic cyclic diketone compound having the structure of formula (IV), a molar ratio of the compound having the structure of formula (III) to the aliphatic cyclic diketone compound having the structure of formula (IV) is 1.5-10:1. Further preferably, the molar ratio is 1.5-5:1; still further preferably, the ratio is 1.5-3.0:1. If the molar ratio of the two compounds is too high, the compound having the structure of formula (III) will be in substantial excess, resulting in low utilization rate of raw materials; if the molar ratio is too low, the content of the component B will be excessively high, which is detrimental to the flame retardance.

Preferably, when the compound having the structure of formula (III) reacts with the aliphatic cyclic diketone compound having the structure of formula (IV), reaction time is between 0.01 h and 25 h. Further preferably, the reaction time is between 0.1 h and 20 h; still further preferably, the reaction time is between 0.5 h and 10 h. If the reaction time is too short, the content of the component B will be excessively high, which is detrimental to the flame retardance; whereas if the reaction time is too long, the production efficiency will be low and the production cost will be increased.

Typically, when the molar ratio of the compound having the structure of formula (III) to the aliphatic cyclic diketone compound having the structure of formula (IV) is too low, the content of the component B may be reduced by appropriately extending the reaction time, so that the content of the component B can be adjusted to a proper range, so as to reduce the production cost while ensuring the flame retardant efficiency of Mixture C.

Preferably, when the compound having the structure of formula (III) reacts with the aliphatic cyclic diketone compound having the structure of formula (IV), the reaction temperature ranges from room temperature to 250°C. Further preferably, the reaction temperature ranges from 50°C to 220°C; still further preferably, the reaction temperature ranges from 80°C to 200°C. If the reaction temperature is too high, the compound having the structure of formula (III) tends to be thermally degraded; conversely, a too low reaction temperature will result in a sluggish reaction rate and poor economic efficiency.

When the compound having the structure of formula (III) reacts with the aliphatic cyclic diketone compound having the structure of formula (IV), the reaction may be performed in the absence of a solvent or in an inert solvent. The absence of a solvent means that no other solvent is added to a reactant, but the excess reactant serves as a solvent. For example, when a large amount of the compound having the structure of formula (III) is added, the portion of the compound having the structure of formula (III), left after the reaction with the aliphatic cyclic diketone compound having the structure of formula (IV), can serve as a solvent. The inert solvent may be, for example, one or more selected from conventional solvents including aromatic hydrocarbon, alkane, alcohol, and ester; optionally, the inert solvent is one or more selected from toluene, xylene, and trimethylbenzene.

When the compound having the structure of formula (III) reacts with the aliphatic cyclic diketone compound having the structure of formula (IV), the reaction may be performed at normal pressure, positive pressure or negative pressure.

When the compound having the structure of formula (III) reacts with the aliphatic cyclic diketone compound having the structure of formula (IV), unexpectedly, the reaction may be performed without the addition of a catalyst. Typically, the phosphination reaction in which a P-H bond is added to a ketone group, namely the Pudovik reaction, requires a basic or acidic catalyst. However, when the compound having the structure of formula (III) reacts with the aliphatic cyclic diketone compound having the structure of formula (IV), no catalyst needs to be added, which greatly reduces the cost of catalyst removal and greatly improves the economic efficiency. Of course, the reaction may also be performed in the presence of a catalyst, and the catalyst may be any catalyst used in the Pudovik reaction, such as one or more selected from titanate, organic amine, inorganic base, aliphatic aluminum alcoholate, and the like. Preferably, the reaction is performed without the addition of a catalyst.

After the reaction is completed, the product is subjected to purification to remove unreacted materials and impurities, so as to obtain the hydroxyl-containing DOPO composite flame retardant having the structures of formula (I) and formula (II). The purification methods include conventional methods such as solvent washing and recrystallization. Optionally, after completion of the reaction, the product is washed with a solvent. Optionally, the solvent used in the solvent washing is a good solvent for the compound having the structure of formula (III) and/or the aliphatic cyclic diketone compound having the structure of formula (IV). Optionally, the solvent used in the solvent washing is one or more selected from alcohol, ester, ether, alkane and aromatic hydrocarbon. Optionally, the solvent used in the solvent washing is one or more selected from ethanol, isopropanol, toluene and p-xylene.

A third objective of the present invention is achieved by the following technical solutions:
A preparation method for the hydroxyl-containing DOPO composite flame retardant includes the following steps: physically mixing the component A having the structure of formula (I) and the component B having the structure of formula (II). In the mixture, the content of the component A is larger than or equal to 50 wt%, but smaller than 100 wt%, and the content of the component B is larger than 0 wt%, but smaller than or equal to 50 wt%.

The component A and the component B may be separately obtained by means of reacting the compound having the structure of formula (III) with the aliphatic cyclic diketone compound having the structure of formula (IV).

Specifically, a method for preparing the component A having the structure represented by formula (I) includes the following steps: reacting the compound having the structure of formula (III) with the aliphatic cyclic diketone compound having the structure of formula (IV), wherein by means of, such as, controlling the molar ratio of the aliphatic cyclic diketone compound having the structure of formula (IV) to the compound having the structure of formula (III) to be less than or equal to 0.5, and controlling the reaction time and purification method, the product obtained is pure component A having the structure represented by formula (I).

A method for preparing the component B having the structure represented by formula (II) includes the following steps: reacting the compound having the structure of formula (III) with the aliphatic cyclic diketone compound having the structure of formula (IV), wherein by means of, such as, controlling the molar ratio of the aliphatic cyclic diketone compound having the structure of formula (IV) to the compound having the structure of formula (III) to be more than or equal to 1, and controlling the reaction time and purification method, the product obtained is pure component A having the structure represented by formula (II).

The specific means of controlling the molar ratio, reaction time and purification method to separately obtain the component A and the component B may be designed according to actual circumstances.

A fourth objective of the present invention is achieved by the following technical solutions:
A flame-retardant polymer material includes the hydroxyl-containing DOPO composite flame retardant and a polymer material.

Preferably, the flame-retardant polymer material includes 1 wt% to 50 wt% of the hydroxyl-containing DOPO composite flame retardant and 50 wt% to 99 wt% of the polymer material.

Optionally, the mass fraction of the hydroxyl-containing DOPO composite flame retardant in the flame-retardant polymer material ranges from 1 wt% to 50 wt%, further from 1 wt% to 45 wt%, further from 1 wt% to 40 wt%, further from 2 wt% to 50 wt%, further from 2 wt% to 45 wt%, further from 2 wt% to 40 wt%, further from 3 wt% to 50 wt%, further from 3 wt% to 45 wt%, further from 3 wt% to 40 wt%, further from 5 wt% to 35 wt%, further from 3 wt% to 30 wt%, further from 5 wt% to 30 wt%, further from 5 wt% to 25 wt%, further from 8 wt% to 30 wt%, further from 10 wt% to 30 wt%, and further from 12 wt% to 30 wt%. All values not listed in the above ranges apply.

Specifically, the amount of the hydroxyl-containing DOPO composite flame retardant depends on the structure of the polymer material and the flame retardant effect to be achieved.

The polymer material is one or more selected from thermoplastic resin and thermosetting resin.

The thermoplastic resin is one or more selected from polybutadiene, polyamide, polyester, polyphenylene ether, acrylonitrile butadiene styrene copolymer, polyethylene, polypropylene, polyvinyl chloride, polystyrene, polyimide, polyphenylene sulfide, and polyether ether ketone.

The thermosetting resin is one or more selected from vinyl polyphenylene ether resin, epoxy resin, cyanate ester resin, BT resin, bismaleimide resin, phenolic resin, polyurethane resin, thermosetting polyimide, unsaturated polyester resin, vinyl resin, benzoxazine resin, arylacetylene resin, and furan resin. Preferably, the thermosetting resin is one or more selected from vinyl polyphenylene ether resin, epoxy resin, cyanate ester resin, BT resin, bismaleimide resin, and thermosetting polyimide. Further preferably, the thermosetting resin is one or more selected from vinyl polyphenylene ether resin and epoxy resin.

The vinyl polyphenylene ether resin refers to a polyphenylene ether resin with unsaturated double bonds in end-capping groups. Optionally, the vinyl polyphenylene ether resin is one or more selected from OPE-2st (Mitsubishi Gas Chemical) and SA-9000 (SABIC).

Preferably, the epoxy resin is one or more selected from bisphenolA epoxy resin, bisphenol F epoxy resin, dicyclopentadiene epoxy resin, biphenyl epoxy resin or naphthol epoxy resin.

Optionally, the mass fraction of the polymer material in the flame-retardant polymer material ranges from 50 wt% to 99 wt%, further from 50 wt% to 90 wt%, further from 50 wt% to 80 wt%, further from 50 wt% to 70 wt%, further from 50 wt% to 60 wt%, further from 55 wt% to 99 wt%, further from 55 wt% to 90 wt%, further from 55 wt% to 80 wt%, further from 55 wt% to 70 wt%, further from 60 wt% to 90 wt%, and further from 65 wt% to 85 wt%. All values not listed in the above ranges apply.

Optionally, the flame-retardant polymer material further includes a functional additive, and the functional additive is at least of a reinforcing agent, an anti-dripping agent, a stabilizer, a pigment, a dye, a charring catalyst, a dispersant, a nucleating agent, an inorganic filler, an organic filler, and an antioxidant.

The reinforcing agent may be, for example, glass fiber.

The anti-dripping agent may be, for example, a polytetrafluoroethylene-based anti-dripping agent.

Preferably, the inorganic filler is one or more selected from silicon dioxide, mica, calcium carbonate, alumina, aluminum nitride, talc, calcium oxide, calcium silicate, glass fiber powder and silica stone. Preferably, the inorganic filler is silicon dioxide. Further preferably, the median particle size (D₅₀) of silicon dioxide ranges from 1 µm to 15 µm.

Preferably, the organic filler is one or more selected from polytetrafluoroethylene powder, polyphenylene sulfide powder and polyethersulfone powder.

Optionally, the mass fraction of the functional additive in the flame-retardant polymer material ranges from 5 wt% to 40 wt%, further from 5 wt% to 35 wt%, further from 5 wt% to 30 wt%, further from 5 wt% to 25 wt%, further from 5 wt% to 20 wt%, further from 10 wt% to 35 wt%, further from 15 wt% to 35 wt%, and further from 20 wt% to 35 wt%. All values not listed in the above ranges apply.

Optionally, the flame-retardant polymer material further includes a flame retardant Q, and the flame retardant Q is one or more selected from a phosphorus-based flame retardant, a nitrogen-based flame retardant and a boron-based flame retardant.

Preferably, the phosphorus-based flame retardant is one or more selected from a bisphosphate-based flame retardant, a phosphazene-based flame retardant, a dialkylphosphinate, a DOPO derivative, and a phosphine oxide compound.

Further, the bisphosphate-based flame retardant is one or more selected from bisphenol A bisdiphenyl phosphate, resorcinol bisdiphenyl phosphate, and 1,3-phenylene tetrakis(2,6-xylyl) phosphate.

Further, the phosphazene-based flame retardant is one or more selected from hexaphenoxycyclotriphosphazene, cyanophenoxyphosphazene (e.g., FP-300, Fushimi Pharmaceutical), allylcyclophosphazene (e.g., SPV-100, Otsuka, Japan), and cyclic biphenoxyphosphazene (e.g. BP-PZ, Otsuka, Japan).

Further, the dialkylphosphinate is one or more selected from aluminum diethylphosphinate, aluminum diisobutylphosphinate, aluminum dipropylphosphinate and zinc diethylphosphinate.

Further, the DOPO derivative is one or more selected from, for example, 6H-dibenzo[c,e][1,2]oxophosphoglyceride, 6,6'-(1,2-ethanediyl)bis-6,6'-dioxide, 6H-dibenzo[c,e][1,2]oxaphosphorin-6,6'-(1,4-ethanediyl)bis-6,6'-dioxide, and 6H-dibenzo[c, e][ 1,2] oxaphosphorin-6,6'-(1,4-phenylethanediyl)bis-6,6'-dioxide (e.g., HTP-6123, GuizhouYuanyi Group).

Further, the phosphine oxide compound is a p-xylylenebis(diphenylphosphine oxide) (e.g., PQ-60, Jinyi Chemical).

Preferably, the nitrogen-based flame retardant is one or more selected from melamine cyanurate, melamine polyphosphate and ammonium polyphosphate.

Preferably, the boron-based flame retardant is selected from zinc borate.

Optionally, the mass fraction of the flame retardant Q in the flame-retardant polymer material ranges from 0.5 wt% to 20 wt%, further from 0.5 wt% to 15 wt%, further from 0.5 wt% to 10 wt%, further from 1 wt% to 20 wt%, further from 1 wt% to 18 wt%, further from 1 wt% to 13 wt%, further from 2 wt% to 19 wt%, further from 2 wt% to 14 wt%, further from 3 wt% to 16 wt%, further from 4 wt% to 17 wt%, and further from 5 wt% to 12 wt%. All values not listed in the above ranges apply.

A fifth objective of the present invention is achieved by the following technical solutions:

A flame-retardant epoxy resin includes the hydroxyl-containing DOPO composite flame retardant, an epoxy compound and a curing agent.

Preferably, in the flame-retardant epoxy resin, the mass percent of the hydroxyl-containing DOPO composite flame retardant ranges from 1 wt% to 30 wt%, and the mass percent of the epoxy compound and the curing agent ranges from 70 wt% to 99 wt%.

The mass percent of the hydroxyl-containing DOPO composite flame retardant is any one of 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt% and 30 wt% or within a range between any two of the aforementioned values. When the mass percent is less than 1 wt%, the flame retardance decreases; if the mass percent is higher than 30 wt%, it will cause a reduction in the physical properties of the flame-retardant epoxy resin.

The mass percent of the epoxy compound and the curing agent optionally ranges from 80 wt% to 99 wt%, and further from 85 wt% to 97 wt%.

The epoxy compound in the flame-retardant epoxy resin contains at least two epoxy groups and is one or more selected from bisphenol or polyphenol glycidyl ether (e.g., bisphenol A epoxy resins E44 and E51), aliphatic chain glycidyl ether (e.g., polyethylene glycol diglycidyl ether), alicyclic glycidyl ether (1,3- or 1,4-cyclohexane dimethanoldiglycidyl ether), glycidyl ester (e.g., tetrahydrophthalic acid diglycidylester, and phthalic acid diglycidyl ester), and a heterocyclic epoxy compound (e.g., triglycidylisocyanurate). Preferably, the epoxy compound is selected from commercially available bisphenol-based glycidyl ethers (e.g., E44 and E51, Baling Petrochemical).

Preferably, the curing agent is an amine-based curing agent which is one or more selected from trimethylenediamine, tetramethylenediamine, hexamethylenediamine, p-phenylenediamine, m-phenylenediamine, p-xylenediamine, m-xylenediamine, 4,4-diaminodiphenylmethane, 4,4-diaminodiphenylsulfone, 4,4-diaminodiphenyl ether, dicyandiamide, and 1,4-cyclohexanediamine. Preferably, the curing agent is one or more selected from trimethylenediamine, tetramethylenediamine, hexamethylenediamine, 4,4-diaminodiphenylmethane and 4,4-diaminodiphenylsulfone.

A preparation method for the flame-retardant epoxy resin specifically includes the following steps:
melting and stirring the epoxy compound, the curing agent and the hydroxyl-containing DOPO composite flame retardant for 0.1 h to 4 h at a temperature between room temperature and 120°C, and then curing for 0.5 h to 8 h at a temperature between 70 °C to 90 °C, a temperature between 110 °C and 130 °C, and a temperature between 160 °C and 180 °C respectively, and cooling naturally to obtain the flame-retardant epoxy resin. Preferably, the melting and stirring time ranges from 0.5 h to 2 h, and the time of curing at different temperatures ranges from 0.5 h to 4 h.

The component A having the structure of formula (I) is a diol flame retardant containing α-hydroxyl and having an aliphatic cyclic bridge chain. Compared with hydroxyl-free DOPO derivatives, the diol flame retardant can better improve the compatibility between the flame retardant and epoxy resin, and reduce the loss of physical properties of epoxy compound materials caused by the introduction of low-molecular-weight flame retardants. Due to the presence of the rigid cyclic bridge chain structure, the α-hydroxyl group has higher chemical stability and is not prone to dehydration. In contrast, other compounds either with hydroxyl not at the α-position or with α-hydroxyl but without a cyclic bridge chain structure exhibit poor chemical and thermal stability. Therefore, the former can well overcome the drawbacks of the latter which is prone to thermal degradation or participation in unnecessary chemical reactions.

The component B having the structure of formula (II) not only contains α-hydroxyl and thus possesses the advantages of the component A having the structure of formula (I), but also contains ketone functional group, which can react with the hydroxyl of epoxy resin or an amine-based curing agent to participate in the curing process of epoxy resin. Hence, as a reactive curing agent, the product having the structure of formula (II) can overcome the adverse effects of additive flame retardants on the physical properties of epoxy resin, especially on the glass transition temperature, and well maintain the original physical properties of epoxy resin.

A sixth objective of the present invention is achieved by the following technical solutions:
A low-dielectric flame-retardant resin composition includes 5 to 150 parts by weight of the hydroxyl-containing DOPO composite flame retardant and 100 parts by weight of vinyl polyphenylene ether resin.

The low-dielectric flame-retardant resin composition of the present invention further includes a crosslinking agent and an initiator. Optionally, 1 to 200 parts by weight of the crosslinking agent and 0.1 to 15 parts by weight of the initiator are added per 100 parts by weight of the vinyl polyphenylene ether resin.

Preferably, the low-dielectric flame-retardant resin composition has a dielectric loss factor lower than that of a composition including the vinyl polyphenylene ether resin but not including the hydroxyl-containing DOPO composite flame retardant.

Preferably, the low-dielectric flame-retardant resin composition has a dielectric loss factor lower than that of a composition including the vinyl polyphenylene ether resin, the crosslinking agent and the initiator but not including the hydroxyl-containing DOPO composite flame retardant.

Compounds containing hydroxyl groups are known to be detrimental to the dielectric loss factor. That is, the introduction of hydroxyl groups increases the dielectric loss factor. Surprisingly, even though the component A or Mixture C also contains hydroxyl groups, the impact of introduction of hydroxyl groups therefrom on the dielectric loss factor is significantly smaller than that of traditional hydroxyl groups. This result may be attributed to the fact that the α-hydroxyl group in the compound A can form an intramolecular hydrogen bond with P=O. Moreover, since the existence of cyclic bridge chain restricts the conformation of the α-hydroxyl group, the strength of the intramolecular hydrogen bond is stronger than that of the hydrogen bond formed by hydroxyl on a non-cyclic bridge chain and the impact of the hydroxyl group on dielectric loss is significantly reduced. In addition, the intramolecular hydrogen bonds also significantly reduce the chemical reactivity of the hydroxyl group.

In the low-dielectric flame-retardant resin composition, 5 to 150 parts by weight of the hydroxyl-containing DOPO composite flame retardant are added per 100 parts by weight of the vinyl polyphenylene ether resin. If the hydroxyl-containing DOPO composite flame retardant is used in a too small amount, flame retardance is insufficient; conversely, the use of a too large amount of the hydroxyl-containing DOPO composite flame retardant has an increased adverse effect on the mechanical properties of the flame-retardant resin composition. Optionally, based on 100 parts by weight of the vinyl polyphenylene ether resin, the amount of the hydroxyl-containing DOPO composite flame retardant is any one of 5, 10, 15, 20, 25, 30, 35, 40, 45, 50, 55, 60, 65, 70, 75, 80, 85, 90, 95, 100, 110, 120, 130, 140 and 150 parts by weight or within a range between any two of the aforementioned values.

Preferably, in the component A having the structure of formula (I) in the hydroxyl-containing DOPO composite flame retardant, R₁ and R₂ are ethylene, R₃=R₄=H, and x=y=0. In the component B having the structure of formula (II) in the hydroxyl-containing DOPO composite flame retardant, R₁ and R₂ are ethylene, R₃=R₄=H, and x=y=0.

The vinyl polyphenylene ether resin refers to a polyphenylene ether resin with unsaturated double bonds in end-capping groups. Optionally, the vinyl polyphenylene ether resin is one or more selected from OPE-2st (Mitsubishi Gas Chemical) and SA-9000 (SABIC).

The low-dielectric flame-retardant resin composition includes a crosslinking agent. Optionally, the crosslinking agent is used in an amount of 1 to 200 parts by weight per 100 parts by weight of the vinyl polyphenylene ether resin. Optionally, the crosslinking agent includes, but is not limited to, olefinic compounds; optionally, the crosslinking agent is selected from polybutadiene, polyisoprene, triallylisocyanurate, triallylcyanurate, styrene-butadiene-styrene polymer, styrene-butadiene polymer, and bismaleimide. Preferably, the crosslinking agent is selected from triallylisocyanurate.

The low-dielectric flame-retardant resin composition includes an initiator. Optionally, the initiator is used in an amount of 0.1 to 15 parts by weight per 100 parts by weight of the vinyl polyphenylene ether resin. Optionally, one or more initiators may be optionally added to accelerate the curing rate of the resin. Preferably, the initiator includes a free-radical-generating peroxide, including, but not limited to, dicumyl peroxide, di-tert-butylperoxydiisopropylbenzene, tert-butyl peroxybenzoate, benzoyl peroxide, dibenzoyl peroxide, and tert-butyl peroxyisopropyl carbonate. Most preferably, the initiator is dicumyl peroxide.

Optionally, the low-dielectric flame-retardant resin composition includes a polymer resin and/or a functional additive.

The polymer resin is one or more selected from thermoplastic polymer resin and thermosetting polymer resin.

The thermoplastic polymer resin is one or more selected from polybutadiene, polyamide, polyester, polyphenylene ether, acrylonitrile butadiene styrene copolymer, polyethylene, polypropylene, polyvinyl chloride, polystyrene, polyimide, polyphenylene sulfide, and polyether ether ketone.

The thermosetting polymer resin is one or more selected from epoxy resin, cyanate ester resin, BT resin, bismaleimide resin, phenolic resin, polyurethane resin, thermosetting polyimide, unsaturated polyester resin, vinyl resin, benzoxazine resin, arylacetylene resin, and furan resin. Preferably, the polymer resin is one or more selected from epoxy resin, cyanate ester resin, BT resin, bismaleimide resin, and thermosetting polyimide.

Optionally, in the low-dielectric flame-retardant resin composition, 1 to 300 parts by weight of the polymer resin are added per 100 parts by weight of the vinyl polyphenylene ether resin. The amount of the polymer resin may be any one of 1, 2, 3, 4, 5, 10, 15, 20, 25, 30, 35, 40, 45, 50, 60, 70, 80, 90, 100, 120, 150, 180, 200, 230, 260 and 300 parts by weight, or within a range between any two of the aforementioned values.

The functional additive is at least of a reinforcing agent, an anti-dripping agent, a stabilizer, a pigment, a dye, a charring catalyst, a dispersant, a nucleating agent, an inorganic filler, an organic filler, and an antioxidant.

The reinforcing agent may be, for example, glass fiber.

The anti-dripping agent may be, for example, a polytetrafluoroethylene-based anti-dripping agent.

Preferably, the inorganic filler is one or more selected from silicon dioxide, mica, calcium carbonate, alumina, aluminum nitride, talc, calcium oxide, calcium silicate, glass fiber powder and silica stone. Preferably, the inorganic filler is silicon dioxide. Further preferably, the median particle size (D₅₀) of silicon dioxide ranges from 1 µm to 15 µm.

Preferably, the organic filler is one or more selected from polytetrafluoroethylene powder, polyphenylene sulfide powder and polyethersulfone powder.

Optionally, in the low-dielectric flame-retardant resin composition, 1 to 500 parts by weight of the functional additive are added per 100 parts by weight of the vinyl polyphenylene ether resin. The amount of the functional additive may be any one of 1, 2, 3, 4, 5, 10, 15, 20, 25, 30, 35, 40, 45, 50, 60, 70, 80, 90, 100, 120, 150, 180, 200, 230, 260, 300, 350, 400, 450 and 500 parts by weight, or within a range between any two of the aforementioned values.

Optionally, the low-dielectric flame-retardant resin composition further includes a flame retardant Q, and the flame retardant Q is one or more selected from a phosphorus-based flame retardant, a nitrogen-based flame retardant and a boron-based flame retardant.

Preferably, the phosphorus-based flame retardant is one or more selected from a bisphosphate-based flame retardant, a phosphazene-based flame retardant, a dialkylphosphinate, a DOPO derivative, and a phosphine oxide compound.

Further, the bisphosphate-based flame retardant is one or more selected from bisphenol A bisdiphenyl phosphate, resorcinol bisdiphenyl phosphate, and 1,3-phenylene tetrakis(2,6-xylyl) phosphate.

Further, the phosphazene-based flame retardant is one or more selected from hexaphenoxycyclotriphosphazene, cyanophenoxyphosphazene (e.g., FP-300, Fushimi Pharmaceutical), allylcyclophosphazene (e.g., SPV-100, Otsuka, Japan), and cyclic biphenoxyphosphazene (e.g. BP-PZ, Otsuka, Japan).

Further, the dialkylphosphinate is one or more selected from aluminum diethylphosphinate, aluminum diisobutylphosphinate, aluminum dipropylphosphinate and zinc diethylphosphinate.

Further, the DOPO derivative is one or more selected from, for example, 6H-dibenzo[c,e][1,2]oxophosphoglyceride, 6,6'-(1,2-ethanediyl)bis-6,6'-dioxide, 6H-dibenzo[c,e][1,2]oxaphosphorin-6,6'-(1,4-ethanediyl)bis-6,6'-dioxide, and 6H-dibenzo[c, e][1,2] oxaphosphorin-6,6'-(1,4-phenylethanediyl)bis-6,6'-dioxide (e.g., HTP-6123, GuizhouYuanyi Group).

Further, the phosphine oxide compound is a p-xylylenebis(diphenylphosphine oxide) (e.g., PQ-60, Jinyi Chemical).

Preferably, the nitrogen-based flame retardant is one or more selected from melamine cyanurate, melamine polyphosphate and ammonium polyphosphate.

Preferably, the boron-based flame retardant is selected from zinc borate.

Optionally, in the low-dielectric flame-retardant resin composition, 1 to 30 parts by weight of the flame retardant Q are added per 100 parts by weight of the vinyl polyphenylene ether resin. The amount of the flame retardant Q may be any one of 1, 2, 3, 4, 5, 8, 10, 12, 15, 18, 20, 25 and 30 parts by weight, or within a range between any two of the aforementioned values.

Compared with the prior art, the present invention has the following beneficial effects:
1. By controlling the process conditions such as reaction time, reaction molar ratio and reaction temperature, and through the subsequent purification step, the component A having the structure of formula (I) and the component B having the structure of formula (II) can be effectively obtained, and the hydroxyl-containing DOPO composite flame retardant of the present invention can be prepared by physically mixing the component A and the component B.
2. By controlling the process conditions such as reaction time, reaction molar ratio and reaction temperature, and through the subsequent purification step, the mixed product of the component A having the structure of formula (I) and the component B having the structure of formula (II) can be effectively obtained, and the mixed product is the hydroxyl-containing DOPO composite flame retardant of the present invention. Compared with the preparation of the component A, the preparation process of the mixed product does not require the removal of the component B and therefore has the advantages of shorter reaction time, simpler purification operation and higher economic efficiency.
3. Although the hydroxyl-containing DOPO composite flame retardant of the present invention contains hydroxyl groups, the hydroxyl-containing DOPO composite flame retardant can significantly reduce the dielectric loss factor(Df) of polymer materials, which is completely unexpected.
4. Mixture C composed of the component A and the component B achieves the integration of high flame retardance and high physical properties in a flame-retardant material, and overcomes the defects that using the component B alone leads to low flame-retardant efficiency and that using the component A alone results in deterioration in the mechanical properties of a high polymer material.

### BRIEF DESCRIPTION OF THE SEVERAL VIEWS OF THE DRAWINGS

FIG. 1 shows a ³¹P nuclear magnetic resonance (NMR) spectrum of the product of Example 1 of the present invention.
FIG. 2 shows a ¹H nuclear magnetic resonance (NMR) spectrum of the product of Example 1 of the present invention.
FIG. 3 shows an infrared (IR) spectrum of the product of Example 1 of the present invention.
FIG. 4 shows a ³¹P nuclear magnetic resonance (NMR) spectrum of the product of Example 2 of the present invention.
FIG. 5 shows a ¹H nuclear magnetic resonance (NMR) spectrum of the product of Example 2 of the present invention.
FIG. 6 shows an infrared (IR) spectrum of the product of Example 2 of the present invention.

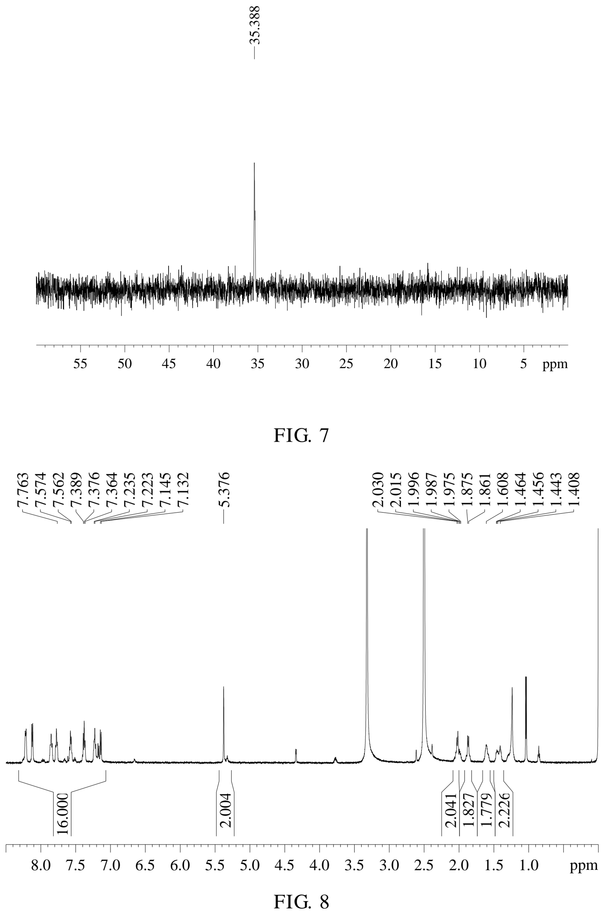

FIG. 7 shows a ³¹P nuclear magnetic resonance (NMR) spectrum of the product of Example 6 of the present invention.
FIG. 8 shows a ¹H nuclear magnetic resonance (NMR) spectrum of the product of Example 6 of the present invention.

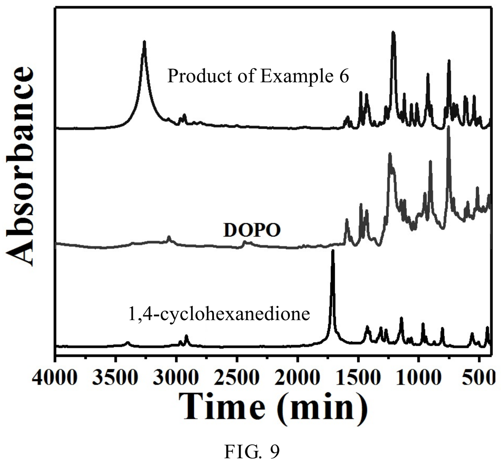

FIG. 9 shows an infrared (IR) spectrum of the product of Example 6 of the present invention.

### DETAILED DESCRIPTION OF THE INVENTION

The technical solutions of the present invention are further described and illustrated below by way of specific examples and accompanying drawings. It should be understood that the specific examples described herein are only intended to facilitate the understanding of the present invention and are not intended to impose any specific limitations on the present invention. Moreover, the accompanying drawings used herein are merely for better illustrating the content disclosed by the present invention and shall not impose any limitations on the scope of protection. Unless otherwise specified, the raw materials used in the examples of the present invention are all commonly used raw materials in the art, and the methods adopted in the examples are all conventional methods in the art.

Chemical reagents used in the following Examples and Comparative Examples were as follows:
(A1) E44 bisphenolA epoxy resin, purchased from Baling Petrochemical, with an epoxy value of 0.44.
(B1) 4,4-diaminodiphenylmethane (DDM), a curing agent, purchased from Aladdin Reagent.
(C1) Vinyl polyphenylene ether resin, manufactured by Sabic under the trade name SA9000.
(D) Triallylisocyanurate (TAIC), a crosslinking agent, purchased from Aladdin Reagent.
(E1) Flame retardant component A prepared in Example 6.
(E2) Flame retardant component B prepared in Example 1.
(E3) Flame retardant mixture C prepared in Example 3.
(E4) Flame retardant mixture C prepared in Example 5.
(E5) Divinylidene-bridged DiDOPO-A was prepared according to Chinese Patent Publication No. CN110885344A. The specific preparation method is as follows: 32.4 g of DOPO (0.15 mol), 25 g of diphenylmethane and 20 g of xylene were placed into a four-necked flask equipped with a thermometer, a water separator, a mechanical stirrer and a constant pressure funnel. Under nitrogen protection, the mixture was heated to 195 °C, and then a mixed solution of ethylene carbonate (6.6 g, 0.075 mol) and sodium iodide (0.34 g, 0.0023 mol) was added dropwise at a constant rate within 2.5 h, and the temperature of the reaction system was held at 195 °C for 2 h till the end of the reaction. After the reaction system was cooled down, 38 g of isopropanol was added, with stirring under reflux for 20 min. After standing and cooling, suction filtration was performed. The solid product was first washed with isopropanol and then with an appropriate amount of deionized water for three times, and then dried in vacuum at 180°C to obtain a white solid powder, i.e., the divinylidene-bridged DiDOPO-A.
(E6) DOPO-formaldehyde adduct: The specific preparation method is as follows: 43.20 g of DOPO (0.20 mol) and 60 g of xylene were placed into a four-necked flask equipped with a thermometer, a magnetic stirrer and a reflux condenser. Under nitrogen protection, the mixture was heated to 95 °C, and then 6.01 g of paraformaldehyde (0.20 mol) was added in several times, followed by reaction at 95 °C for 4 h. After standing and cooling, suction filtration was performed. The solid product was washed with toluene, and then dried in vacuum at 100 °C to obtain a white solid powder product, i.e., the DOPO-formaldehyde adduct.
(E7) DOPO-acetone adduct: The specific preparation method is as follows: 21.60 g of DOPO (0.10 mol) and 46.4 g of acetone (0.40 mol) were placed into a four-necked flask equipped with a thermometer, a magnetic stirrer and a reflux condenser. Under nitrogen protection, the mixture was heated to reflux temperature, followed by reflux reaction for 4 h. After standing and cooling, suction filtration was performed. The solid product was first washed with acetone and then with an appropriate amount of deionized water for three times, and then dried in vacuum at 80 °C to obtain a white solid powder product, i.e., the DOPO-acetone adduct.
(F1) Polybutadiene (PB), purchased from Macklin Reagent.
(F2) BT resin, obtained by curing reaction of N, N'-4,4'-diphenylmethane bismaleimide (BMI) and cyanate ester resin (CE), both purchased from Aladdin Reagent.
(G) Dicumyl peroxide (DCP), an initiator, purchased from Aladdin Reagent.
(H) Spherical silicon dioxide, an inorganic filler, purchased from Qinghe County Andi Metal Materials Co., Ltd., with a particle size of 2 µm.
(I) 1,4-cyclohexanedione, purchased from Aladdin Reagent.
(J) 9,10-dihydro-9-oxa-10-phosphaphenanthrene-10-oxide (DOPO), purchased from Macklin Reagent.

The methods of characterization in the Examples and Comparative Examples are as follows:
(1) Nuclear magnetic resonance (NMR) spectroscopy: performed on a Bruker AVANCE III 400M NMR spectrometer (Bruker, USA) using deuterated dimethyl sulfoxide as a solvent.
(2) Fourier transform infrared (FTIR) spectroscopy: performed on a Nicolet 6700 infrared spectrometer (Thermo-Fisher, USA), using the KBr pellet method

The flame-retardant resin materials prepared in Examples and Comparative Examples were tested by the following methods:
(1) Flame retardance test: UL-94 vertical burning test was performed on a Model 5400 horizontal/vertical burning tester in accordance with the ASTM D3801 standard.
(2) Mechanical property test: Tensile and flexural tests were performed on Model 5567 universal tensile testing machine (Instron, USA) in accordance with GB/T 1040.1-2006 standard and GB/T 9341-2000 standard respectively; notched impact test was performed on a GT-7045-HML impact tester (GOTECH, Taiwan, China) in accordance with ISO179-1:98 standard.
(3) Glass transition temperature (T_{g}): T_{g} of the polyphenylene ether resin composition was obtained using a TMA 402 F3 thermomechanical analyzer (NETZSCH, Germany); T_{g} of the epoxy resin material was measured using a DSC (METTLER, Sweden).
(4) Dielectric constant (Dk) and dielectric loss factor (Df): The dielectric constant (Dk) and dielectric loss factor (Df) of the flame-retardant resin materials were measured by the stripline method on a ZNA Vector Network Analyzer (ROHDE & Schwarz GmbH, Germany), and the value of Df was taken as the average within the frequency range of 9 GHz to 12 GHz.
(5) Coefficient of thermal expansion (CTE): The CTE was tested via thermal mechanical analysis (TMA) on a TMA 402 F3 thermal mechanical analyzer (NETZSCH, Germany).

### Example 1

Under nitrogen protection, 0.05 mol of 1,4-cyclohexanedione was placed in a 250 mL four-necked round-bottom flask equipped with a thermometer, a reflux condenser and a magnetic stirrer; 100 mL of p-xylene was added and the mixture was heated to 120 °C until 1,4-cyclohexanedione was completely dissolved; 0.050 mol of DOPO was then added in two batches and the reaction was continued at 120 °C for 2 h. After completion of the reaction, suction filtration was performed while the reaction solution was hot; the product was then washed three times with hot toluene, and the washed solid product was dried in vacuum at 100 °C to obtain a white product, with a yield of 94.8%. The white product obtained is component B having the structure of formula (II), where R₁ and R₂ are ethylene (-CH₂CH₂-), R₃ and R₄ are hydrogen atoms, x=y=0.

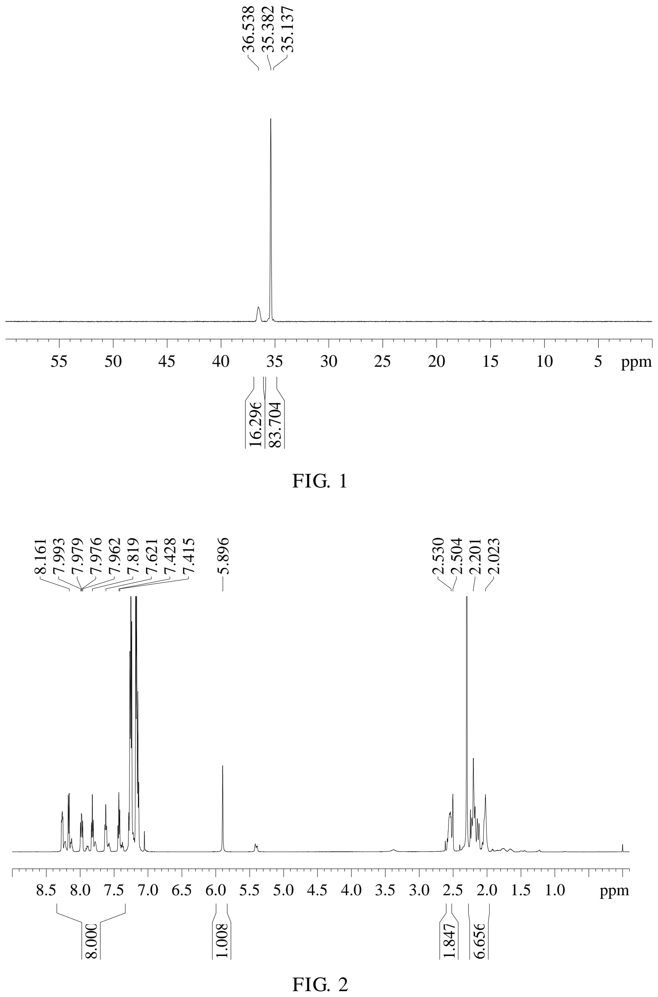

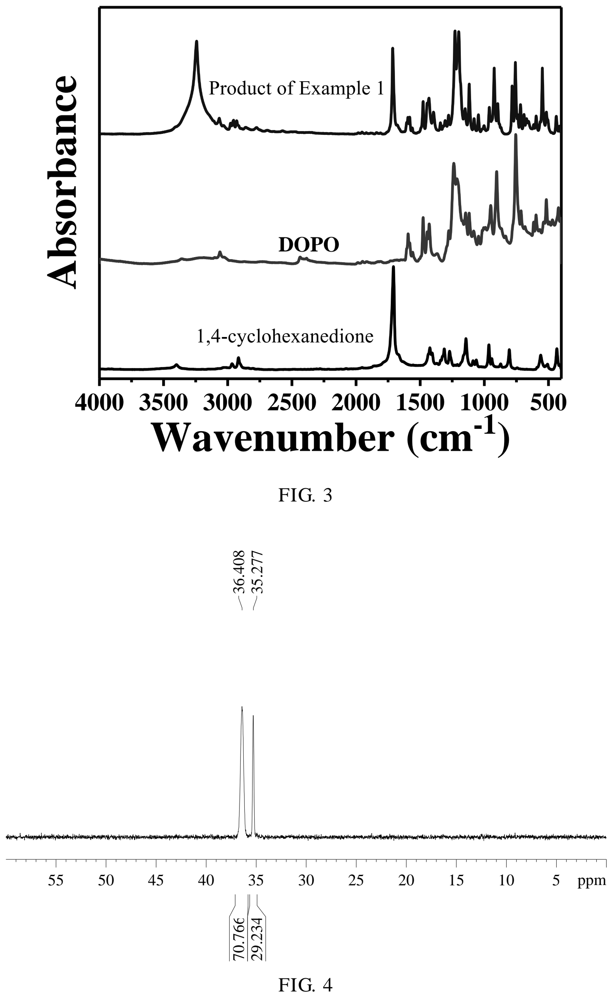

The ³¹P nuclear magnetic resonance (NMR) spectrum and ¹H NMR spectrum of the component B prepared in Example 1 are shown in FIG. 1 and FIG. 2, respectively. NMR data: ³¹P NMR: 35 ppm; ¹H NMR: 7-8.5 ppm (assigned to the hydrogen atoms of the benzene ring), 5.90 ppm (assigned to the hydrogen atoms of hydroxyl), 2.0-2.7 ppm (assigned to the hydrogen atoms of the alicyclic ring). The infrared (IR) spectrum of the component B is shown in FIG. 3, with characteristic peaks at 1708 cm⁻¹ (assigned to carbonyl) and 3263 cm⁻¹ (assigned to hydroxyl).

### Example 2

Under nitrogen protection, 0.10 mol of DOPO was placed in a 250 mL four-necked round-bottom flask equipped with a thermometer, a reflux condenser and a magnetic stirrer; 120 mL of p-xylene was added and the mixture was heated to 120 °C until DOPO was completely dissolved; 0.05 mol of 1,4-cyclohexanedione was then added in two batches and the reaction was continued at 120 °C for 2 h. After completion of the reaction, suction filtration was performed while the reaction solution was hot; the product was then washed three times with hot toluene and then dried in vacuum at 100 °C to obtain a white mixed product. With the theoretical yield calculated based on the complete formation of component A (a double-addition product), the reaction yield reached 84.0%. The content of unreacted DOPO was determined and calculated via nuclear magnetic resonance (NMR). The mixed product contained 73 wt% of the component A having the structure of formula (I) and 27 wt% of the component B having the structure of formula (II), where R₁ and R₂ are ethylene (-CH₂CH₂-), R₃ and R₄ are hydrogen atoms, and x=y=0.

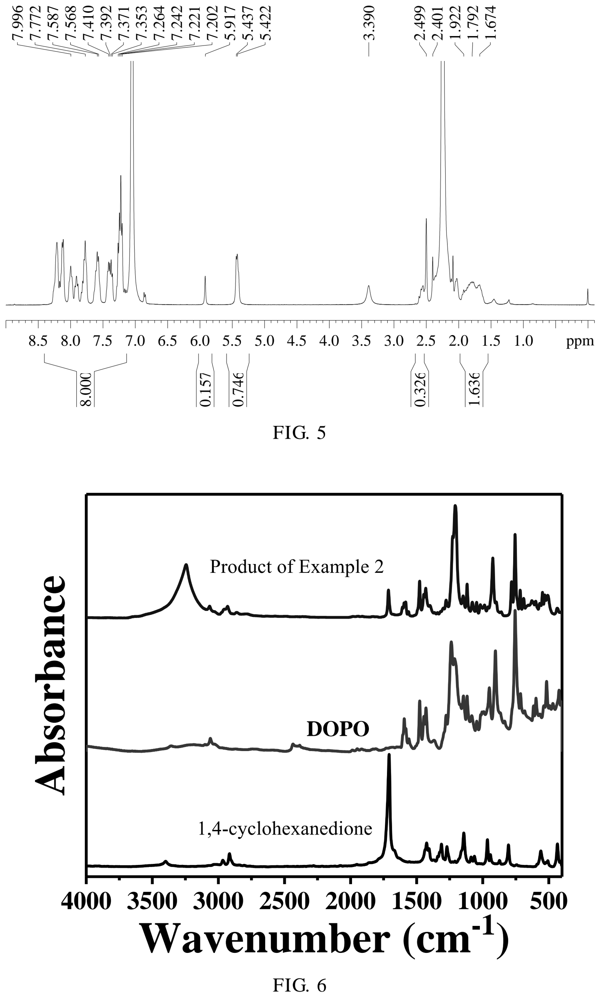

The ³¹P nuclear magnetic resonance (NMR) spectrum and ¹H NMR spectrum of the mixed product prepared in Example 2 are shown in FIG. 4 and FIG. 5, respectively. NMR data: ³¹P NMR: 36 ppm (assigned to component A, a double-addition product) and 35 ppm (assigned to component B, a single-addition product); ¹H NMR: 7-8.5 ppm (assigned to the hydrogen atoms of the benzene ring), 5.90 ppm (assigned to the hydroxyl hydrogen atoms of component B), 5.42 ppm and 5.43 ppm (assigned to the hydroxyl hydrogen atoms of component A), and 2.0-2.7 ppm (assigned to the hydrogen atoms of the alicyclic ring). The infrared (IR) spectrum of the mixed product is shown in FIG. 6, with characteristic peaks at 1708 cm⁻¹ (assigned to carbonyl) and 3263 cm⁻¹ (assigned to hydroxyl).

### Example 3

Under nitrogen protection, 0.10 mol of DOPO was placed in a 250 mL four-necked round-bottom flask equipped with a thermometer, a reflux condenser and a magnetic stirrer; 120 mL of p-xylene was added and the mixture was heated to 120 °C until DOPO was completely dissolved; 0.05 mol of 1,4-cyclohexanedione was then added in two batches and the reaction was continued at 120 °C for 2 h. After completion of the reaction, suction filtration was performed while the reaction solution was hot; the product was then washed three times with hot isopropanol and then dried in vacuum at 100 °C to obtain a white mixed product. With the theoretical yield calculated based on the complete formation of component A (a double-addition product), the reaction yield reached 84.6%. The content of unreacted DOPO was determined and calculated via nuclear magnetic resonance (NMR). The mixed product contained 82 wt% of the component A having the structure of formula (I) and 18 wt% of the component B having the structure of formula (II), where R₁ and R₂ are ethylene (-CH₂CH₂-), R₃ and R₄ are hydrogen atoms, and x=y=0.

### Example 4

Under nitrogen protection, 0.15 mol of DOPO was placed in a 250 mL four-necked round-bottom flask equipped with a thermometer, a reflux condenser and a magnetic stirrer; 120 mL of p-xylene was added and the mixture was heated to 120 °C until DOPO was completely dissolved; 0.05 mol of 1,4-cyclohexanedione was then added in two batches and the reaction was continued at 120 °C for 2 h. After completion of the reaction, suction filtration was performed while the reaction solution was hot; the product was then washed three times with hot toluene and then dried in vacuum at 100°C to obtain a white mixed product. With the theoretical yield calculated based on the complete formation of component A (a double-addition product), the reaction yield reached 96.3%. The content of unreacted DOPO was determined and calculated via nuclear magnetic resonance (NMR). The mixed product contained 94 wt% of the component A having the structure of formula (I) and 6 wt% of the component B having the structure of formula (II), where R₁ and R₂ are ethylene (-CH₂CH₂-), R₃ and R₄ are hydrogen atoms, and x=y=0.

### Example 5

Under nitrogen protection, 0.15 mol of DOPO was placed in a 250 mL four-necked round-bottom flask equipped with a thermometer, a reflux condenser and a magnetic stirrer; 120 mL of p-xylene was added and the mixture was heated to 120 °C until DOPO was completely dissolved; 0.05 mol of 1,4-cyclohexanedione was then added in two batches and the reaction was continued at 120 °C for 2 h. After completion of the reaction, suction filtration was performed while the reaction solution was hot; the product was then washed three times with hot isopropanol and then dried in vacuum at 100 °C to obtain a white mixed product. With the theoretical yield calculated based on the complete formation of component A (a double-addition product), the reaction yield reached 99.0%. The content of unreacted DOPO was determined and calculated via nuclear magnetic resonance (NMR). The mixed product contained 98 wt% of the component A having the structure of formula (I) and 2 wt% of the component B having the structure of formula (II), where R₁ and R₂ are ethylene (-CH₂CH₂-), R₃ and R₄ are hydrogen atoms, and x=y=0.

### Example 6

Under nitrogen protection, 0.15 mol of DOPO was placed in a 250 mL four-necked round-bottom flask equipped with a thermometer, a reflux condenser and a magnetic stirrer; 120 mL of p-xylene was added and the mixture was heated to 120 °C until DOPO was completely dissolved; 0.05 mol of 1,4-cyclohexanedione was then added in two batches and the reaction was continued at 120 °C for 5 h. After completion of the reaction, suction filtration was performed while the reaction solution was hot; the product was then washed five times with hot isopropanol, and the washed solid product was dried in vacuum at 100 °C to obtain a white product (with a yield of 99.0%) for later use. As determined by nuclear magnetic resonance (NMR), the white product was identified as component A having the structure of formula (I), where R₁ and R₂ are ethylene (-CH₂CH₂-), R₃ and R₄ are hydrogen atoms, and x=y=0.

### Example 7

77.0 parts of bisphenol A epoxy resin E44, 5.7 parts of the product obtained in Example 6 and 0.3 part of the product obtained in Example 1 were weighed and well mixed with a magnetic stirrer at 90 °C; 17.0 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, tensile, flexural and notched impact tests, with the results shown in Table 1.

### Example 8

77.0 parts of bisphenol A epoxy resin E44, 5.4 parts of the product obtained in Example 6 and 0.6 part of the product obtained in Example 1 were weighed and well mixed with a magnetic stirrer at 90 °C; 17.0 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, LOI (Limited Oxygen Index), tensile, flexural and notched impact tests, with the results shown in Table 1.

### Example 9

74.5 parts of bisphenol A epoxy resin E44, 4.8 parts of the product obtained in Example 6 and 3.2 parts of the product obtained in Example 1 were weighed and well mixed with a magnetic stirrer at 90 °C; 17.5 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, LOI (Limited Oxygen Index), tensile, flexural and notched impact tests, with the results shown in Table 1.

### Examples 10

74.5 parts of bisphenol A epoxy resin E44, 4.0 parts of the product obtained in Example 6 and 4.0 parts of the product obtained in Example 1 were weighed and well mixed with a magnetic stirrer at 90 °C; 17.5 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, LOI (Limited Oxygen Index), tensile, flexural and notched impact tests, with the results shown in Table 1.

### Examples 11

74.5 parts of bisphenol A epoxy resin E44 and 8.0 parts of the product obtained in Example 3 were weighed and well mixed with a magnetic stirrer at 90 °C; 17.5 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, LOI (Limited Oxygen Index), tensile, flexural and notched impact tests, with the results shown in Table 1.

### Example 12

100 parts of SA9000, 50 parts of TAIC and 200 parts of toluene were weighed and dissolved completely with a magnetic stirrer at room temperature, and 50 parts of the flame retardant prepared in Example 5 were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Example 13

100 parts of SA9000, 50 parts of TAIC and 200 parts of toluene were weighed and dissolved completely with a magnetic stirrer at room temperature, and 50 parts of the flame retardant prepared in Example 3 were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Example 14

100 parts of SA9000, 50 parts of TAIC, 72 parts of polybutadiene (PB) and 200 parts of toluene were weighed and dissolved completely with a magnetic stirrer at room temperature, and 80 parts of silicon dioxide and 112 parts of the flame retardant prepared in Example 5 were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Example 15

100 parts of SA9000, 50 parts of TAIC, 57.6 parts of CE, 14.4 parts of BMI and 200 parts of toluene were weighed and well mixed with a magnetic stirrer at room temperature, and 80 parts of silicon dioxide and 112 parts of Mixture C prepared in Example 5 were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Example 16

Under nitrogen protection, 5.44 g of the product (0.01 mol) obtained in Example 6 and 10.20 g of acetic anhydride (0.10 mol) were placed in a 100 mL four-necked round-bottom flask equipped with a thermometer, a reflux condenser and a magnetic stirrer. The mixture was heated to 140 °C for refluxing for 6 h. After the white turbid liquid was cooled naturally, suction filtration was performed. The precipitate was washed with anhydrous ethanol three times and dried in an 80 °C vacuum oven, followed by FTIR spectroscopy. The FTIR results were completely consistent with those of the product obtained in Example 6, indicating that the hydroxyl groups of the component A have high chemical stability and neither degrade nor react with acetic anhydride.

### Example 17

Under nitrogen protection, 5.44 g of the product (0.01 mol) obtained in Example 6, 15.01 g of isopropenyl acetate (0.15 mol) and 5% p-toluenesulfonic acid were placed in a 100 mL four-necked round-bottom flask equipped with a thermometer, a reflux condenser and a magnetic stirrer. The mixture was heated to 95 °C for refluxing for 4 h. After the white turbid liquid was cooled naturally, suction filtration was performed. The precipitate was washed with anhydrous ethanol three times and dried in an 80 °C vacuum oven, followed by FTIR spectroscopy. The FTIR results were completely consistent with those of the product obtained in Example 6, indicating that the hydroxyl groups of the component A have high chemical stability and neither degrade nor react with isopropenyl acetate.

### Comparative Example 1

Under nitrogen protection, 2.74 g of the DOPO-acetone adduct (0.01 mol) and 10.20 g of acetic anhydride (0.10 mol) were placed in a 100 mL four-necked round-bottom flask equipped with a thermometer, a reflux condenser and a magnetic stirrer. The mixture was heated to 140 °C for refluxing for 1 h to obtain a clear and transparent liquid. After natural cooling, excess acetic anhydride was removed by reduced-pressure distillation, yielding a yellow viscous liquid. In FTIR spectroscopy, distinct carbonyl peaks were observed at 1771 cm⁻¹ and 1747 cm⁻¹, indicating that the hydroxyl groups in the DOPO-acetone adduct have high reactivity and thus react with acetic anhydride. ³¹P NMR spectrum demonstrates that the DOPO-acetone adduct undergoes esterification, dehydration, and the reverse reaction of deacetonation to regenerate DOPO, with the proportions of the three reactions accounting for 18%, 37% and 45%, respectively.

### Comparative Example 2

Under nitrogen protection, 2.46 g of the DOPO-formaldehyde adduct (0.01 mol) and 10.20 g of acetic anhydride (0.10 mol) were placed in a 100 mL four-necked round-bottom flask equipped with a thermometer, a reflux condenser and a magnetic stirrer. The mixture was heated to 140 °C for refluxing for 3 h to obtain a clear and transparent liquid. After natural cooling, excess acetic anhydride was removed by reduced-pressure distillation, yielding a yellow viscous liquid. In FTIR spectroscopy, a distinct carbonyl peak was observed at 1753 cm⁻¹, indicating that the hydroxyl groups in the DOPO-formaldehyde adduct have high reactivity and thus react with acetic anhydride. The NMR spectrum demonstrates that the ³¹P NMR chemical shift of the acetylated DOPO-formaldehyde adduct is 28 ppm.

It can be concluded from Examples 16, 17 and Comparative Examples 1 and 2 that the hydroxyl groups in the flame retardant prepared in Example 6 exhibit chemical inertness, whereas the hydroxyl groups in the DOPO-formaldehyde or DOPO-acetone adduct with an analogous structure but with a non-cyclic bridge chain structure have high chemical reactivity. The DOPO-acetone adduct even undergoes degradation and reversibly converts back to DOPO and acetone when heated.

### Comparative Example 3

82.1 parts of bisphenol A epoxy resin E44 were weighed and well mixed with a magnetic stirrer at 90 °C; 17.9 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, tensile, flexural and notched impact tests, with the results shown in Table 1.

### Comparative Example 4

77.0 parts of bisphenol A epoxy resin E44 and 6.0 parts of DiDOPO-A were weighed and well mixed with a magnetic stirrer at 90 °C; 17.0 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, tensile, flexural and notched impact tests, with the results shown in Table 1.

### Comparative Example 5

77.0 parts of bisphenol A epoxy resin E44 and 6.0 parts of the product obtained in Example 6 were weighed and well mixed with a magnetic stirrer at 90 °C; 17.0 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, tensile, flexural and notched impact tests, with the results shown in Table 1.

### Comparative Example 6

77.0 parts of bisphenol A epoxy resin E44 and 6.0 parts of the product obtained in Example 1 were weighed and well mixed with a magnetic stirrer at 90 °C; 17.0 parts of DDM were then added and melted completely at 90 °C; the mixture was degassed in a 80 °C vacuum oven for 3 min, then poured into a preheated mold quickly, left to stand still for 5 min, and heated to 120 °C for curing for 2 h, then heated to 170 °C for curing for 4 h, and finally cooled naturally to room temperature to obtain specimens for tests including UL-94 vertical burning, LOI (Limited Oxygen Index), tensile, flexural and notched impact tests, with the results shown in Table 1.

### Comparative Example 7

100 parts of SA9000, 50 parts of TAIC and 200 parts of toluene were weighed and dissolved completely with a magnetic stirrer at room temperature, and then heated to 70 °C; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Comparative Example 8

100 parts of SA9000, 50 parts of TAIC and 200 parts of toluene were weighed and dissolved completely with a magnetic stirrer at room temperature, and 50 parts of DiDOPO-A were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Comparative Example 9

100 parts of SA9000, 50 parts of TAIC and 200 parts of toluene were weighed and dissolved completely with a magnetic stirrer at room temperature, and 50 parts of the flame retardant prepared in Example 6 were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Comparative Example 10

100 parts of SA9000, 50 parts of TAIC and 200 parts of toluene were weighed and dissolved completely with a magnetic stirrer at room temperature, and 50 parts of the flame retardant prepared in Example 1 were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °C for 2 h, 190 °C for 1 h and 220 °C for 1 h. After natural cooling to room temperature, the specimens for UL-94 vertical burning, dielectric property and CTE tests were obtained, with the results shown in Table 2.

### Comparative Example 11

100 parts of SA9000, 50 parts of TAIC and 200 parts of toluene were weighed and dissolved completely with a magnetic stirrer at room temperature, and 50 parts of DOPO-formaldehyde adduct were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °Cfor 2 h, 190 °C for 1 h and 220 °C for 1 h. After natural cooling to room temperature, the specimens for UL-94 vertical burning, dielectric property and CTE tests were obtained, with the results shown in Table 2.

### Comparative Example 12

100 parts of SA9000, 50 parts of TAIC and 200 parts of toluene were weighed and dissolved completely with a magnetic stirrer at room temperature, and 50 parts of DOPO-acetone adduct were added; the reaction system was heated to 70 °C and well stirred until no bubbles were observed; 4 parts of DCP were added, and the reaction system was stirred at 70 °C for 30 min, and then transferred to an 80 °C vacuum oven to remove toluene to obtain a pre-cured resin. The pre-cured resin with the solvent removed was placed into a mold preheated at 100 °C, followed by curing in a plate vulcanizing press with a curing procedure as follows: 150 °C for 1 h, 170 °Cfor 2 h, 190 °C for 1 h and 220 °C for 1 h. After natural cooling to room temperature, the specimens for UL-94 vertical burning, dielectric property and CTE tests were obtained, with the results shown in Table 2.

**Table 1 Formulations and properties of flame-retardant epoxy resin materials**

| | Example 7 | Example 8 | Example 9 | Example 10 | Example 11 | Comparati ve Example 3 | Comparati ve Example 4 | Comparati ve Example 5 | Comparati ve Example 6 |
|---|---|---|---|---|---|---|---|---|---|
| Al (part) | 77.0 | 77.0 | 74.5 | 74.5 | 74.5 | 82.1 | 77.0 | 77.0 | 77.0 |
| B1 (part) | 17.0 | 17.0 | 17.5 | 17.5 | 17.5 | 17.9 | 17.0 | 17.0 | 17.0 |
| E1 (part) | 5.7 | 5.4 | 4.8 | 4.0 | | | | 6.0 | |
| E2 (part) | 0.3 | 0.6 | 3.2 | 4.0 | | | | | 6.0 |
| E3 (part) | | | | | 8.0 | | | | |
| E5 (part) | | | | | | | 6.0 | | |
| Tensile strength (MPa) | 81 | 85 | 82 | 79 | 81 | 102 | 78 | 81 | 87 |
| Tensile modulus (MPa) | 1795 | 1757 | 1925 | 1908 | 1954 | 1811 | 1937 | 1900 | 1909 |
| Elongation at break(%) | 6.7 | 6.8 | 6.5 | 6.2 | 5.5 | 8.6 | 5.2 | 5.9 | 6.5 |
| Flexural strength(MP a) | 103 | 110 | 106 | 108 | 112 | 148 | 92 | 96 | 109 |
| Flexural modulus(M Pa) | 2899 | 2868 | 3016 | 3125 | 3115 | 2844 | 3178 | 3104 | 3114 |
| Notched impact strength (kJ/m²) | 5.5 | 7.1 | 4.7 | 4.8 | 4.5 | 11.9 | 5.9 | 5.6 | 5.9 |
| T_{g} (°C) | 148 | 148 | 150 | 149 | 138 | 149 | 139 | 146 | 146 |
| UL-94 | V0 | V0 | V0 | V1 | V0 | NR | V0 | V0 | NR |

It can be seen from Table 1 that the results of Comparative Example 3 demonstrate that the epoxy resin has excellent mechanical properties, especially a high glass transition temperature, but has poor flame retardance. The results of Comparative Example 4 show that the addition of DiDOPO-A to the epoxy resin improves the flame retardance, but reduces the mechanical properties, with a significant decrease in T_{g} in particular. The results of Comparative Example 5 demonstrate that the component A is superior to DiDOPO-A in maintaining the physical properties of the flame-retardant epoxy resin, especially the glass transition temperature. The results of Comparative Example 6 and Comparative Example 5 reveal that the epoxy resin flame-retarded with the component B alone exhibits better mechanical properties than that flame-retarded with the component A alone, whereas the former has inferior flame retardance to the latter. The results of Examples 7 to 11 prove that Mixture C not only has higher efficiency than the component B, but also achieves the same flame retardant effect as the component A. This shows that the introduction of the component B does not reduce the flame retardant efficiency of Mixture C, which is quite surprising. Moreover, the results of Examples 7-10 suggest that the glass transition temperature of the epoxy resin flame-retarded with Mixture C is higher than that of the epoxy resins flame-retarded with the component A or the component B alone, reaching or even exceeding the glass transition temperature of the pristine epoxy resin. This is totally unexpected.

**Table 2 Formulations of low-dielectric flame-retardant polyphenylene ether resins**

| Component | Example 12 | Example 13 | Example 14 | Example 15 | Compara tive example 7 | Compar ative example 8 | Compar ative example 9 | Compar ative example 10 | Compar ative example 11 | Compar ative example 12 |
|---|---|---|---|---|---|---|---|---|---|---|
| C1 (part) | 100 | 100 | 100 | 100 | 100 | 100 | 100 | 100 | 100 | 100 |
| D (part) | 50 | 50 | 50 | 50 | 50 | 50 | 50 | 50 | 50 | 50 |
| E1 (part) | | | | | | | 50 | | | |
| E2 (part) | | | | | | | | 50 | | |
| E3 (part) | | 50 | | | | | | | | |
| E4 (part) | 50 | | 112 | 112 | | | | | | |
| E5 (part) | | | | | | 50 | | | | |
| E6 (part) | | | | | | | | | 50 | |
| E7 (part) | | | | | | | | | | 50 |
| F1 (part) | | | 72 | | | | | | | |
| F2 (part) | | | | 72 | | | | | | |
| G (part) | 4 | 4 | 4 | 4 | 4 | 4 | 4 | 4 | 4 | 4 |
| H (part) | | | 80 | 80 | | | | | | |

| Physical property | | | | | | | | | | |
|---|---|---|---|---|---|---|---|---|---|---|
| Dk (9-12 GHz) | 2.78 | 2.76 | 2.74 | 3.01 | 2.67 | 2.80 | 2.77 | 2.71 | 2.78 | 2.83 |
| Df (9-12 GHz) | 0.0068 | 0.0071 | 0.0031 | 0.0051 | 0.0085 | 0.0058 | 0.0065 | 0.022 | 0.0095 | 0.022 |
| T_{g} (°C) | 207 | 194 | 210 | 157 | 187 | 215 | 203 | 164 | 191 | 160 |

| CTE | | | | | | | | | | |
|---|---|---|---|---|---|---|---|---|---|---|
| α1 (ppm/°C, 50-120°C) | 118 | 126 | 141 | 141 | 145 | 119 | 117 | 152 | 176 | 154 |
| Average CTE (%/°C,50-2 60°C) | 1.65 | 1.93 | 1.60 | 1.61 | 1.54 | 1.40 | 1.44 | 2.86 | 1.68 | 3.13 |
| UL-94 | V0 | V1 | V0 | V0 | NR | V1 | V0 | V1 | NR | V1 |

It can be seen from Table 2 that the vinyl polyphenylene ether resin composition in Comparative Example 7 features a high glass transition temperature and a relatively low Df value, but poor flame retardance. The results of Comparative Example 9 demonstrate that the component A can enhance the flame retardance of the polyphenylene ether resin, increase the glass transition temperature of the polyphenylene ether resin, and reduce both the Df value and linear thermal expansion coefficient of the polyphenylene ether resin. The results of Comparative Example 10 show that the component B can improve the flame retardance of the polyphenylene ether resin, but it will decrease the glass transition temperature and increase the Df value as well as the linear thermal expansion coefficient of the resin. The results of Comparative Example 8 and Comparative Example 9 reveal that the component A maintains higher flame retardant efficiency than DiDOPO-A. The results of Comparative Examples 11 and 12 and Comparative Example 7 indicate that DOPO derivatives containing hydroxyl groups but no cyclic bridge chain structure not only exhibit poor flame retardance, but also significantly increase the Df value of the polyphenylene ether resin system. The results of Example 12 and Comparative Example 9 demonstrate that Mixture C containing the component A and the component B can also improve the flame retardance of the polyphenylene ether resin, and the introduction of an appropriate amount of the component B will not reduce the flame retardant efficiency of Mixture C. Moreover, the results of Example 12 suggest that the introduction of Mixture C can also reduce the Df value and linear thermal expansion coefficient of the polyphenylene ether resin, and the effect of Mixture C is entirely comparable to that of the component A. The results of Examples 14 and 15 demonstrate that after introduction of thermoplastic polybutadiene and thermosetting BT resin into the polyphenylene ether system, Mixture C still ensures the excellent flame retardance of the resin, and the resin also exhibits a low Df value, a low linear thermal expansion coefficient and a high glass transition temperature. In addition, it can be seen from the results of Examples 1, 2, 3, 4, 5 and Example 6 that the separate preparation of the component A results in high raw material consumption, long reaction time, large demand for washing solvent, cumbersome post-treatment and low economic efficiency. In contrast, Mixture C features a simpler preparation process and thus possesses stronger competitiveness under the same application conditions.

The various aspects, embodiments, features of the present invention should be considered illustrative in all respects without limiting the present invention. The scope of the present invention is defined only by the claims. Persons skilled in the art will appreciate other embodiments, modifications, and use without departing from the spirit and scope of the present invention.

In the preparation method of the present invention, the order of steps is not limited to the listed order, and for those skilled in the art, it is also within the scope of the present invention to change the order of steps without paying creative labor. In addition, two or more steps or actions may be performed simultaneously.

Finally, it should be noted that the specific embodiments described herein are merely illustrative of the present invention and are not intended to limit the embodiments of the present invention. Various modifications or additions to, or alternatives to, the specific embodiments described may be made by those skilled in the art to which the present invention pertains. It is not necessary and impossible to illustrate all embodiments here. However, these obvious changes or modifications derived from the essential spirit of the present invention shall still fall within the scope of the present invention, and any interpretation thereof as an additional limitation shall be contrary to the spirit of the present invention.

## Claims

1. A hydroxyl-containing DOPO composite flame retardant, comprising a component A having a structure of formula (I) and a component B having a structure of formula (II), 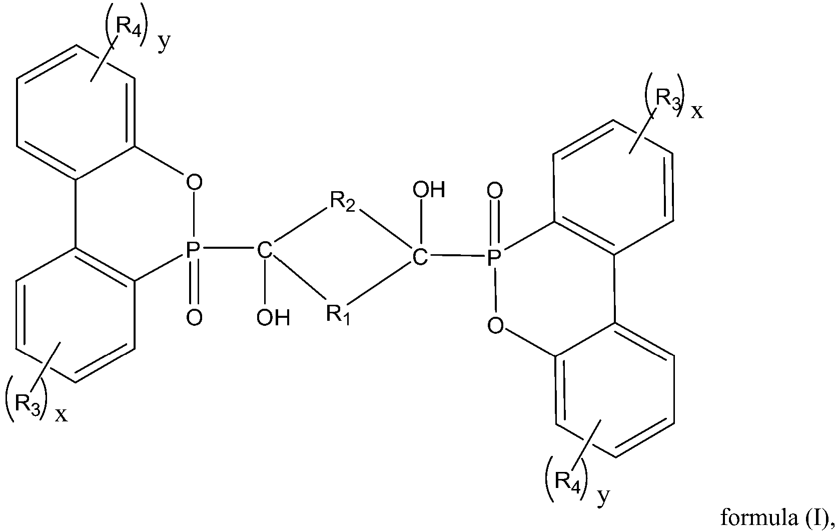 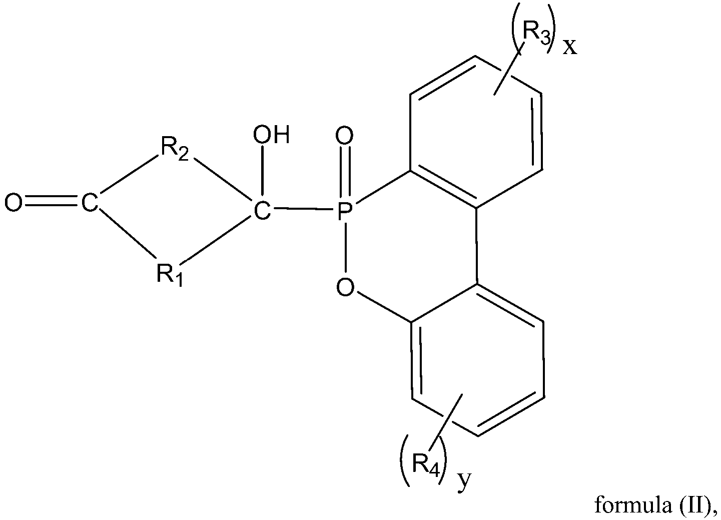
wherein R₁ and R₂ are independently selected from C₁-C₁₈ alkylene, and optionally, any hydrogen atom on the alkylene is independently substituted with C₁-C₈ alkyl or C₆-C₁₈ aryl;
R₃ and R₄ are independently selected from hydrogen, C₁-C₁₈ alkyl, C₃-C₁₈heteroaryl, and C₆-C₂₄ aryl, and optionally, any hydrogen atom on an aromatic ring of the aryl or heteroaryl is independently substituted with any C₁-C₁₈ alkyl; and
x and y are independently selected from 0, 1, 2, 3, and 4.

2. The hydroxyl-containing DOPO composite flame retardant according to claim 1, wherein R₁ and R₂ are independently selected from C₁-C₈alkylene, and optionally, any hydrogen atom on the alkylene is independently substituted with C₁-C₈ alkyl;
R₃ and R₄ are independently selected from hydrogen, C₁-C₈ alkyl, C₃-C₁₈heteroaryl, and C₆-C₁₈ aryl.

3. The hydroxyl-containing DOPO composite flame retardant according to claim 1 or 2, wherein R₁ and R₂ are independently selected from methylene, ethylene, propylene, butylene, methyl-substituted methylene, dimethyl-substituted methylene, ethyl-substituted methylene, methyl-substituted ethylene, dimethyl-substituted ethylene, methyl-substituted propylene, dimethyl-substituted propylene, and propyl-substituted propylene;
R₃ and R₄ are independently selected from hydrogen, methyl and ethyl.

4. The hydroxyl-containing DOPO composite flame retardant according to claim 1, wherein in the hydroxyl-containing DOPO composite flame retardant, the content of the component A is larger than or equal to 50 wt%, but smaller than 100 wt%, and the content of the component B is larger than 0 wt%, but smaller than or equal to 50 wt%.

5. The hydroxyl-containing DOPO composite flame retardant according to claim 1 or 4, wherein in the hydroxyl-containing DOPO composite flame retardant, the content of the component A is larger than or equal to 82 wt%, but smaller than 100 wt%, and the content of the component B is larger than 0 wt%, but smaller than or equal to 18 wt%.

6. A preparation method for the hydroxyl-containing DOPO composite flame retardant according to claim 1, the preparation method comprising the following steps:
reacting a compound having a structure of formula (III) with an aliphatic cyclic diketone compound having a structure of formula (IV), and then purifying a reaction product to obtain a mixed product containing the component A having the structure of formula (I) and the component B having the structure of formula (II); 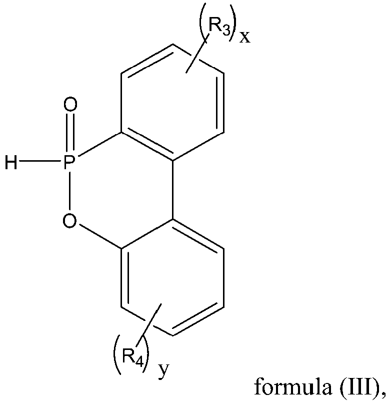
wherein R₃ and R₄ are independently selected from hydrogen, C₁-C₁₈ alkyl, C₃-C₁₈heteroaryl, and C₆-C₂₄ aryl, and optionally, any hydrogen atom on an aromatic ring of the aryl or heteroaryl is independently substituted with any C₁-C₁₈ alkyl; and
x and y are independently selected from 0, 1, 2, 3, and 4; 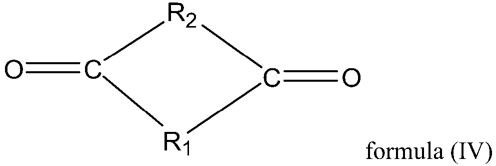
wherein R₁ and R₂ are independently selected from C₁-C₁₈ alkylene, and optionally, any hydrogen atom on the alkylene is independently substituted with C₁-C₈ alkyl or C₆-C₁₈ aryl.

7. The preparation method according to claim 6, wherein the compound having the structure of formula (III) is 9,10-dihydro-9-oxa-10-phosphaphenanthrene-10-oxide.

8. The preparation method according to claim 6, wherein the aliphatic cyclic diketone compound having the structure of formula (IV) is one or more selected from cyclohexanedione, cyclobutanedione, cyclopentanedione, cycloheptanedione, cyclooctanedione, methylcyclohexanedione, dimethylcyclohexanedione, propylcyclohexanedione, tetramethylcyclobutanedione, methylcyclopentanedione, dimethylcyclopentanedione, and ethylcyclopentanedione.

9. The preparation method according to claim 6, wherein a molar ratio of the compound having the structure of formula (III) to the aliphatic cyclic diketone compound having the structure of formula (IV) is 1.5-10:1.

10. The preparation method according to claim 6, wherein reaction time is between 0.01 h and 25 h, and reaction temperature ranges from 5°C to 250°C.

11. A preparation method for the hydroxyl-containing DOPO composite flame retardant according to claim 1, the preparation method comprising the following steps: physically mixing the component A having the structure of formula (I) and the component B having the structure of formula (II), wherein in the mixture, the content of the component A is larger than or equal to 50 wt%, but smaller than 100 wt%, and the content of the component B is larger than 0 wt%, but smaller than or equal to 50 wt%.

12. The preparation method according to claim 11, wherein a method for preparing the component A having the structure represented by formula (I) comprises the following steps: reacting a compound having a structure of formula (III) with an aliphatic cyclic diketone compound having a structure of formula (IV) under controlled conditions, and then purifying the reaction product to obtain the compound A having the structure represented by formula (I); and
a method for preparing the component B having the structure represented by formula (II) comprises the following steps: reacting the compound having the structure of formula (III) with the aliphatic cyclic diketone compound having a structure of formula (IV) under controlled conditions, and then purifying the reaction product to obtain the compound B having the structure represented by formula (II); 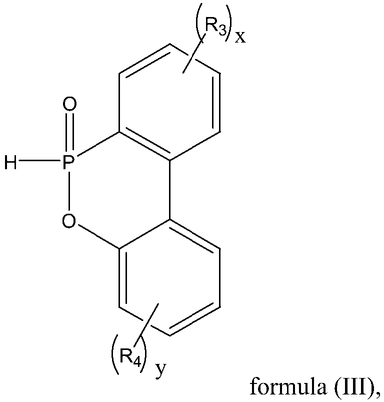
wherein R₃ and R₄ are independently selected from hydrogen, C₁-C₁₈ alkyl, C₃-C₁₈heteroaryl, and C₆-C₂₄ aryl, and optionally, any hydrogen atom on an aromatic ring of the aryl or heteroaryl is independently substituted with any C₁-C₁₈ alkyl; and
x and y are independently selected from 0, 1, 2, 3, and 4; 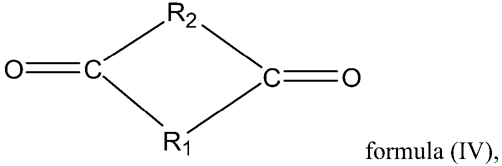
wherein R₁ and R₂ are independently selected from C₁-C₁₈ alkylene, and optionally, any hydrogen atom on the alkylene is independently substituted with C₁-C₈ alkyl or C₆-C₁₈ aryl.

13. A flame-retardant polymer material, comprising a polymer material and the hydroxyl-containing DOPO composite flame retardant according to claim 1.

14. The flame-retardant polymer material according to claim 13, wherein a mass fraction of the hydroxyl-containing DOPO composite flame retardant in the flame-retardant polymer material ranges from 1 wt% to 50 wt%.

15. A flame-retardant epoxy resin, comprising the hydroxyl-containing DOPO composite flame retardant according to claim 1, an epoxy compound and a curing agent.

16. A preparation method for the flame-retardant epoxy resin according to claim 15, comprising the following steps:
melting and stirring the epoxy compound, the curing agent and the hydroxyl-containing DOPO composite flame retardant for 0.1 h to 4 h at a temperature between room temperature and 120°C, and then curing for 0.5 h to 8 h at a temperature between 70°C and 90°C, curing for 0.5 h to 8 h at a temperature between 110°C and 130°C, and finally curing for 0.5 h to 8 h at a temperature between 160°C and 180°C, and cooling naturally to obtain the flame-retardant epoxy resin.

17. A low-dielectric flame-retardant resin composition, comprising 100 parts by weight of vinyl polyphenylene ether resin and 5 to 150 parts by weight of the hydroxyl-containing DOPO composite flame retardant according to claim 1.

18. The low-dielectric flame-retardant resin composition according to claim 17, wherein the low-dielectric flame-retardant resin composition has a dielectric loss factor lower than that of a composition comprising the vinyl polyphenylene ether resin but not comprising the hydroxyl-containing DOPO composite flame retardant.
